Europäisches Patentamt

European Patent Office

Office européen des brevets

(11) Numéro de publication: **0 220 973 B1**

(12) **FASCICULE DE BREVET EUROPEEN**

(45) Date de publication de fascicule du brevet:
29.05.91

(21) Numéro de dépôt: **86402030.0**

(22) Date de dépôt: **17.09.86**

(51) Int. Cl.⁵: **B23G 3/00**

(54) **Appareil de taraudage sur presse.**

(30) Priorité: **20.09.85 FR 8513994**

(43) Date de publication de la demande:
**06.05.87 Bulletin 87/19**

(45) Mention de la délivrance du brevet:
**29.05.91 Bulletin 91/22**

(84) Etats contractants désignés:
**CH DE IT LI NL**

(56) Documents cités:
**EP-A- 0 054 479**
**DE-A- 1 901 922**
**DE-A- 2 060 310**
**FR-A- 2 317 992**
**GB-A- 824 067**

(73) Titulaire: **TELEMECANIQUE**
**43-45, Boulevard Franklin Roosevelt**
**F-92500 Rueil Malmaison(FR)**

(72) Inventeur: **Maillard, Jacques**
**24 rue jean Mermoz**
**F-78629 L'Etang La Ville(FR)**

(74) Mandataire: **Robert, Jean-Pierre et al**
**CABINET BOETTCHER 23, rue la Boétie**
**F-75008 Paris(FR)**

Rank Xerox (UK) Business Services

## Description

L'invention concerne un appereie de taraudage automatique de pièces disposées dans une bande métallique qui se déplace pas à pas entre une table fixe d'une presse à découper et son plateau mobile portant un mécanisme apte à transformer sa course en un mouvement rotatif alterné d'amplitude proportionnelle à la course pour le communiquer à une tête de taraudage qui est entraînée le long de son axe de rotation par le plateau et dont le porte-taraud mobile par rapport à la tête est soumis d'une part à une force de direction parallèle à l'axe de rotation susdit et d'autre part audit mouvement rotatif.

La présente invention est avantageusement utilisée dans les chaînes de fabrication où des pièces issues d'une bande métallique et portées par celle-ci sont progressivement usinées par chacun des poinçons d'une multiplicité d'outils placés l'un derrière l'autre sous le plateau d'une presse et où l'un de ces outils est constitué par un taraud ou une filière devant exécuter, pendant la course du plateau, un filetage dans une ouverture de la pièce qui a été percée au cours d'une phase d'usinage antérieure.

On connaît déjà par exemple par le FR-A 1 444 213 un appareil présentant la constitution générale mentionnée ci-dessus dans lequel le porte-taraud et une chemise qui le guide intérieurement sont associés par un doigt coulissant dans une rainure hélicoïdale; ce dispositif d'accouplement qui permet au porte-taraud de trouver une position longitudinale adaptée, et qui lui communique ensuite une force de même direction et un couple de rotation, doit être étudié pour des conditions de travail connues d'avance et répétitives. Il est par suite moins bien adapté au taraudage de trous de diamètres différents ou à celui de trous de mêmes diamètres présentés par une pièce d'un autre matériau.

On a tenté de donner à la tête de taraudage une faculté d'adaptation en disposant un ressort longitudinal entre la chemise et un porte-taraud angulairement entraîné par celle-ci. Outre les nombreuses ruptures de ressort qui ont été constatées avec ces moyens, on doit mentionner l'inconvénient qui résulte de l'impossibilité d'en régler la force tant dans sa valeur initiale que dans son évolution ultérieure.

Par ailleurs on observe avec les procédés et appareils utilisés antérieurement, soit des dispersions de la hauteur utile des filetages exécutés, soit des modifications de la forme des premiers filets; ces défauts qui pourraient être considérés comme secondaires si les pièces à fileter étaient massives ou de grande épaisseur, prennent une importance beaucoup plus grande lorsqu'ils apparaissent sur des pièces formées à partir d'une bande métallique où la hauteur des portions filetées ne peut dépasser celle qui résulte d'un étirement, forcément limité, du métal.

L'invention se propose par suite de taraudage, de fournir un appareil, grâce au quel l'utilisateur bénéficiera tant d'une meilleure faculté d'adaptation aux dimensions des trous à usiner et aux matériaux des pièces qui les portent, que d'une plus grande qualité et d'une sécurité de fabrication améliorée, accompagnées d'une cadence de fabrication supérieure.

Le but visé est atteint grâce à l'appareil selon la revendication 2. Ainsi avant chaque opération de filetage, on applique au porte-taraud une force axiale pneumatique choisie, sensiblement constante, et dirigée vers la pièce à tarauder, et on interrompt cette application au moment où le taraudage est engagé dans cette pièce sur une longueur qui est suffisante pour assurer la poursuite de sa pénétration sous le seul effet du couple rotatif qui lui est communiqué.

D'autres particularitiés de l'invention apparaîtront mieux à la lecture de la description ci-dessous et à l'examen des figures qui l'accompagnent en illustrant:

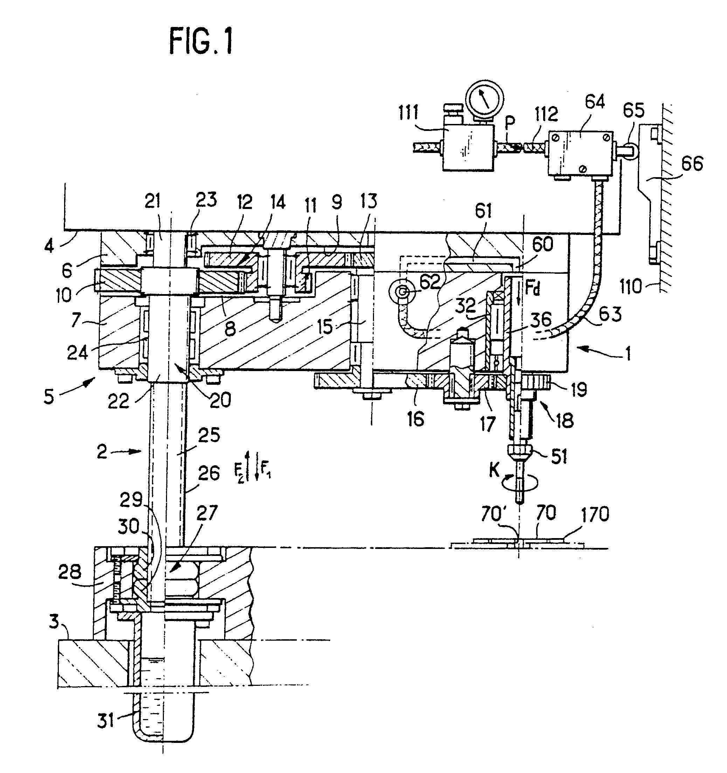

. à la figure 1, un appareil de taraudage automatique installé entre la table et le plateau d'une presse dont les autres éléments ne sont pas représentés;

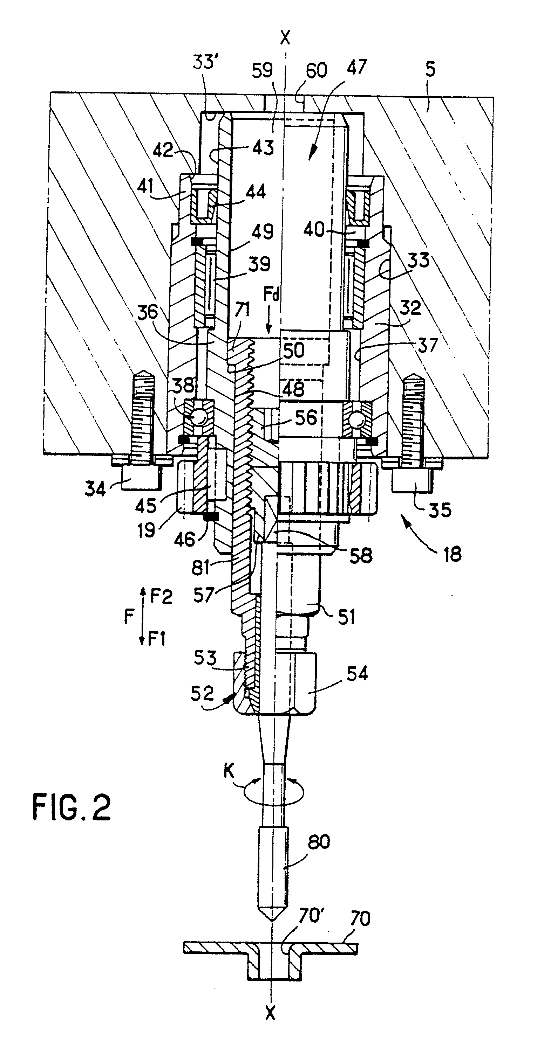

. à la figure 2, par une demi-vue en coupe et par une demi-vue extérieure, une tête de taraudage présentant les caractéristiques de l'invention;

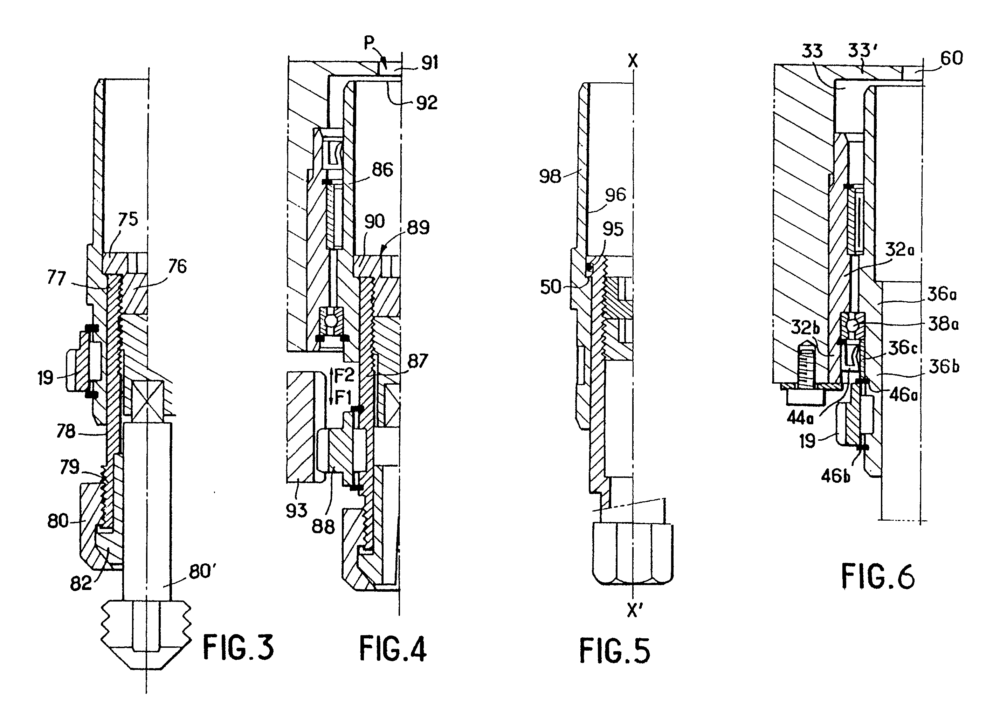

. à la figure 3, par une demi-vue en coupe, la chemise ou broche de la tête recevant un porte-taraud apte à maintenir des tarauds de diamètres plus importants;

. à la figure 4, par une demi-vue en coupe, une tête de taraudage dans laquelle les moyens pour son entraînement en rotation sont modifiés par rapport à ceux utilisés dans les figures antérieures;

. et aux figures 5 et 6, des variantes des dispositions selon l'invention relatives aux moyens d'étanchéité coopérant avec la chemise.

L'appareil de taraudage 1, visible à la figure 1, est installé dans l'espace 2, situé entre une table fixe de presse 3 et un élément ou plateau mobile 4 de cette presse qui se rapproche ou s'éloigne du précédent longitudinalement en directions $F_1$, $F_2$.

L'appareil comprend un corps 5 qui se fixe sur l'élément mobile 4 et qui est constitué par assemblage de deux demi-corps 6, 7 entre lesquels sont ménagés des dégagements 8, 9 aptes à recevoir les différents pignons 10, 11, 12, 13, d'un train d'engrenages multiplicateur 14, dont les arbres sont montés tournants entre ces demi-corps; le pignon 13 est calé sur un arbre traversant 15 qui est solidaire du pignon 16 pour entraîner à son tour le pignon 17.

Une tête de taraudage ou filetage 18, dont la constitution sera précisée en regard des figures suivantes, comporte un pignon 19 qui engrène avec le dernier pignon 17 du train 14.

Le premier pignon 10 est porté par un arbre 20 dont des portions cylindriques 21, 22 pivotent sur des roulements 23, 24 et dont un prolongement cylindrique 25 est muni d'un ou de plusieurs filets hélicoïdaux d'une vis à grands pas 26.

Cette vis 26 coopère avec un système d'écrou fixe à rattrapage de jeu 27, qui est solidaire d'un plateau 28 fixé sur la table. Cet écrou qui est ici composé de deux noix ajustables 29, 30 de rattrapage de jeu axial est prolongé par un récipient 31 rempli de lubrifiant.

Lorsqu'en partant de la position d'ouverture illustrée sur la figure 1, le plateau 4 se rapproche de la table 3 en sens $F_1$ pour exécuter des opérations de découpage ou de pliage de pièces placées en bande, un mouvement de rotation est communiqué à la vis 26 dont le mouvement est multiplié par le train de pignons 10, 11, 12, 13, 16, 17. Lors de la remontée du plateau, une rotation de sens inverse est imprimée à la vis 26 et au train de pignons susdits.

La tête de taraudage 18 qui est contenue dans un boîtier cylindrique tubulaire 32 peut être aisément associée au corps 5, en étant logée dans une cavité 33 de ce corps 5, de façon étanche et ajustée et retenue dans celle-ci grâce à des vis 35, 34, représentées en figure 2.

Sur cette figure, on voit qu'une broche creuse ou chemise 36 est montée pivotante et immobilisée axialement dans l'alésage 37 du boîtier grâce à des roulements 38, 39, et un espace annulaire 40 placé près de l'extrémité interne 41 entre la surface intérieure 42 du boîtier et la surface extérieure 43 de la broche est occupé par un joint d'étanchéité 44.

Le pignon 19, qui est calé sur la broche par une clavette 45 est retenu axialement par un circlips 46.

Un logement 47 qui traverse entièrement et longitudinalement la broche 36 présente une première région inférieure ou externe 48 de section prismatique par exemple hexagonale à sommets arrondis et une seconde région supérieure ou interne 49 qui est cylindrique et est séparée de la précédente par une épaulement transversal 50.

Un porte-outil coaxial 51 présente principalement trois portions superposées, dont la première portion externe 52 comporte une pince creuse 53 et un écrou de blocage 54 pour le maintien d'un taraud 80, dont la seconde portion 81 présente une section prismatique coulissante exactement ajustée avec la région 48, et dont la troisième portion 71 est constituée par une collerette débordante apte à venir s'appuyer sur l'épaulement 50. Un bouchon fileté 56 maintient une pièce d'accouplement 57 destinée à entraîner la queue 58 du taraud.

Le porte-outil qui vient d'être décrit peut effectuer des déplacements longitudinaux de direction F, d'une part par rapport à la broche 36, et d'autre part par rapport à la table 3, 28 lorsque le plateau 4 se déplace; ce porte-outil peut également tourner autour de l'axe XX' en même temps que la broche.

La position de repos de ce porte-outil, qui est représentée sur la figure 2, résulte de la présence d'une pression pneumatique dans la chambre 59 qui est placée au-dessus de la collerette 71, cette pression de fluide étant communiquée à cette chambre par un orifice 60 du fond 33' de la cavité 33 se trouvant relié à un connecteur pneumatique 62 grâce à un canal 61 placé dans le corps 5 (voir aussi figure 1).

L'alimentation de ce connecteur est opérée à l'aide d'une canalisation souple, représentée à la figure 1 en partie par 63, et d'une vanne pneumatique 64 placée en série.

Cette vanne qui est placée sur une paroi du plateau 4 de la presse, présente un organe de commande 65 dont l'actionnement est opéré par une came ou rampe ajustable 66 qui est rendue solidaire d'un bâti 110 fixe, de façon que l'alimentation en fluide soit établie et interrompue pour une certaine position du plateau par rapport au bâti 110.

La mise en oeuvre de l'appareil qui vient d'être décrit, s'effectue dans le cadre d'une fabrication de pièces à partir d'une bande de métal qui se déplace pas à pas entre un poinçon et une matrice dont des empreintes voisines reçoivent à chaque pas une portion de bande ayant déjà subi une opération dans l'empreinte précédente; l'opération de taraudage, dont la tête 18 a la charge, est donc exécutée au même rythme que celui qui est imposé aux opérations annexes de découpe ou de pliage.

Lorsqu'une pièce 70 de la bande 170 a été amenée en regard de la tête de taraudage et que celle-ci se trouve dans la position haute qui correspond au sommet de la course du plateau, une pression P est appliquée à la chambre 59 par la vanne 64; le porte-outil 51 est donc appliqué contre l'épaulement 71 par une force élastique $F_d$ qui est pratiquement constante.

Lorsque le plateau descend dans le même sens, le taraud se rapproche à la même vitesse d'un trou 70' de la pièce 70 tout en tournant et jusqu'au moment où s'opère leur rencontre.

Si le premier filet du taraud ne commence pas immédiatement à creuser une amorce de filetage dans la pièce, le taraud est temporairement immobilisé dans le sens longitudinal et un déplacement relatif du porte-outil et de la broche s'établit jusqu'au moment où cette amorce de filetage est entamée; des réglages judicieux de la pression P et de la position de la came ou rampe 66 sont évidemment nécessaires pour que la force longitudinale à laquelle le taraud se trouve soumis, la nature du matériau de la pièce et éventuellement celle des lubrifiants employés permettent l'engagement du taraud; la pression P est avantageusement ajustée à l'aide d'un détendeur 111 qui est de préférence solidaire du bâti 110 et relié par une canalisation souple 112 pour faciliter ce réglage.

Dès que le taraud a creusé un certain nombre de filets, par exemple deux ou trois, ces derniers peuvent jouer le rôle d'un écrou pour le taraud qui est constamment soumis à un couple de rotation K par le mouvement du train de pignons; il n'est donc pas nécessaire de continuer à appliquer au taraud une force $F_d$ qui introduirait un frottement et une usure supplémentaires de cet outil. L'application de la pression P qui est interrompue par le mouvement de la vanne dès que ces deux ou trois premiers filets sont creusés, reste également interrompue lorsque le plateau remonte en sens $F_2$ et que le taraud est entraîné en sens inverse; le cas échéant une pression beaucoup plus faible -p- peut être appliquée lorsque la pression P est interrompue et peut à son tour être encore réduite ou annulée lorsque s'effectue le mouvement de sens $F_2$.

La réapparition de la pression s'établit ensuite lorsque le plateau prend une position voisine du sommet de sa course, et dans tous les cas lorsque le taraud est dégagé du filetage qu'il vient de réaliser.

Les avantages du dispositif qui vient d'être décrit résultent notamment de la constance de la force longitudinale qui est appliquée au taraud et du fait que cette force qui ne nécessite pour sa génération aucune pièce mécanique, peut être interrompue à tout moment de la course du taraud; la rapidité des fabrications se trouve de ce fait améliorée.

Les défauts de fonctionnement qui sont rencontrés avec les ressorts utilisés antérieurement ne peuvent ici se produire.

Bien que l'on ait mentionné l'existence de surfaces prismatiques lisses et ajustées 48, 81 pour établir un accouplement rotatif axialement libre et sans fuites notables entre la broche et le porte-outil, on admettra que toute autre forme de section (par exemple ovale) est susceptible de répondre aux besoins d'un tel accouplement à condition de ne pas présenter des angles où l'étanchéité est difficile à assurer; une section de forme polygonale est avantageuse du fait du besoin d'immobiliser l'extrémité inférieure du porte-outil lors du serrage de la pince 53.

Dans une première variante de réalisation, visible à la figure 3, une collerette 75 faisant partie du bouchon 76 est rapportée sur l'extrémité interne 77 du porte-outil 78 afin de donner à l'extrémité externe 79 de celui-ci un diamètre assez important pour porter une pince 80, 82, apte à serrer des tarauds 80' de diamètres plus importants; cette collerette est rapportée afin que le porte-outil puisse être introduit de bas en haut lors du montage de celui-ci dans la broche.

Dans une seconde variante de réalisation représentée figure 4, la broche 86 ne sert que de moyen de guidage longitudinal et rotatif pour le porte-outil 87 sur lequel un pignon d'entraînement 88 est calé en rotation et dont la surface transversale supérieure 89 de la collerette 90 est soumise comme précédemment à une force pneumatique se propageant à travers l'orifice 91 et l'ouverture 92.

La hauteur de ce pignon d'entraînement est plus faible que celle du dernier pignon 93 de la chaîne qui lui transmet ses mouvements afin que la continuité de l'engrènement soit assurée lorsqu'un mouvement relatif longitudinal de sens $F_1$ et $F_2$ s'établit entre le porte-outil et la broche.

La présence d'un joint d'étanchéité, susceptible d'empêcher le passage du fluide entre la surface 48 de la broche et la surface du porte-outil 81 représenté figure 2, n'est pas indispensable lorsque le jeu transversal entre ces deux pièces est réduit; la broche et le porte-outil représentent en quelque sorte un vérin rotatif dont la chemise serait la pièce 36, tandis que la tige et le piston seraient les pièces 71, 51. Si pour quelque raison un tel jeu devait être plus important un joint à lèvre ou un joint torique tel que 95, voir figure 5, pourrait être mis en place, par exemple et de préférence au-dessus de l'épaulement 50 afin que son application sur la surface interne cylindrique 96 de la broche 98 soit parfaitement répartie et que son usure soit donc plus réduite.

Dans une troisième variante de réalisation non représentée et qui peut présenter un avantage lorsque la force longitudinale à communiquer au taraud est importante, un culbuteur placé dans l'axe du porte-outil communique à celui-ci une force importante qui est développée par une membrane ou un soufflet recevant une pression de fluide et se trouvant indifféremment placé à l'intérieur du corps ou l'extérieur de celui-ci lorsque la disposition s'y prête.

Dans le mode de réalisation de la figure 2, le joint d'étanchéité à lèvre 44 est placé de façon telle que la pression P ne parvienne pas aux roulements 38, 39. On peut également disposer un joint de façon telle qu'il assure en même temps une protection des roulements ainsi que cela est visible à la figure 6 dans le mode de réalisation où la broche 36a comporte, dans une région 36b, opposée à l'orifice 60 du fond 33' du logement 33, voisine du roulement 38a, une surface portée lisse 36c contre laquelle est appliqué un joint 44a fixé par sa périphérie contre un prolongement 32b du boîtier 32a; le pignon 19 est ici maintenu axialement entre deux circlips tels que 46a, 46b.

L'invention trouve une application intéressante dans le domaine des machines outils.

## Revendications

1. Appareil de taraudage automatique de pièces disposées dans une bande métallique (170) qui se déplace pas à pas entre une table fixe (3) d'une presse à découper et son plateau mobile (4) portant un mécanisme (14) apte à transformer sa course en un mouvement rotatif alterné d'amplitude proportionnelle à la course pour le communiquer à une tête de taraudage (18) qui est entraînée le long de son axe de rotation par le plateau (4) et dont le porteraud (51) mobile par rapport à la tête (18) est soumis d'une part à une force de direction parallèle à l'axe de rotation susdit et d'autre part audit mouvement rotatif, caractérisé en ce que le porte-taraud (51) susdit constitue la tige et le piston d'un vérin, coulissant de manière étanche dans une broche (36, 36a, 98) qui en constitue la chemise tout en étant angulairement solidaire de cette dernière, ladite chemise étant montée à rotation dans un boîtier (32) tandis que ladite force $F_d$ parallèle à l'axe de rotation est engendrée par l'admission d'un fluide pneumatique sous pression dans une chambre étanche délimitée par l'extrémité du porte-taraud (51), ladite broche (36, 36a, 98), ledit boîtier (32) et des moyens d'étanchéité (44, 44a, 95) concentriques disposés entre eux.

2. Appareil de taraudage selon la revendication 1, caractérisé en ce que les moyens d'étanchéité (44) sont placés diamétralement entre une extrémité interne (43) de la broche (36) et du boîtier (32) contenant des roulements (38) respectivement (39) qui lui servent de paliers, et axialement entre cette extrémité et le porte-taraud (51), ce boîtier étant disposé de façon étanche dans le corps (5).

3. Appareil de taraudage selon l'une des revendications 1 et 2, caractérisé en ce que les moyens d'étanchéité (44a) sont placés radialement entre une portée interne (32b) dudit boîtier qui est opposé à un orifice d'entrée de pression (60), et une portée externe (36c) de la broche ou chemise (36a) voisine du porte-taraud (80, 80').

4. Appareil de taraudage selon l'une des revendications précédentes caractérisé en ce qu'il comporte une vanne (64) de commande de l'admission du fluide pneumatique dans la chambre susdite coopérant avec une rampe ajustable (66) au moyen d'un organe (65) d'actionnement de l'ouverture et de la fermeture de la vanne (64) mobile avec le plateau par rapport à la rampe (66).

5. Appareil de taraudage selon la revendication 4 caractérisé en ce qu'il comporte un régulateur (111) de pression en amont de la vanne (64).

6. Appareil de taraudage selon l'une des revendications précédentes, caractérisé en ce que l'accouplement angulaire susdit, présentant une liberté de déplacement longitudinal limitée vers l'extérieur, établi entre la broche ou chemise (36) et le porte-taraud (51), consiste en des surfaces prismatiques longitudinales (48,81) par exemple à contour hexagonal, ménagées en correspondance sur la chemise (32) et le porte-taraud (51).

7. Appareil de taraudage selon la revendication 6, caractérisé en ce que la limitation du déplacement longitudinal du porte-taraud (51) est obtenue par la rencontre d'une collerette interne (71) du porte-taraud qui circule avec un faible jeu le long d'un logement (49) de la chemise (36), sur laquelle s'applique la pression pneumatique susdite et un épaulement (50) de cette chemise limitant les surfaces prismatiques (48,51).

## Claims

1. Apparatus for automatically tapping parts disposed in a metal strip (170) which is displaced stepwise between a fixed table (3) of a cutting press and its moving plate (4) which carries a mechanism (14) suitable for transforming its stroke into an alternating rotary motion of amplitude proportional to the stroke in order to communicate said motion to a tapping head (18) which is driven along its axis of rotation by the plate (4) and whose tap-carrier (51) which is movable relative to the head (18) is subjected firstly to a force in a direction parallel to the above-specified axis of rotation and secondly to said rotary motion, characterized in that the above-specified tap-carrier (51) constitutes the rod and the piston of an actuator which is slidable in sealed manner in a spindle (36, 36a, 98) constituting the actuator cylinder while being angularly fixed relative thereto, said cylinder being rotatably mounted in a casing (32) while said force is developed by admitting a pneumatic fluid under pressure into a sealed chamber delimited by the end of the tap-carrier (51), said spindle (36, 36a, 98), said casing (32), and concentric sealing means (44, 44a, 95) disposed therebetween.

2. Tapping apparatus according to claim 1, characterized in that the sealing means (44) are placed diametrically between an inside end (43) of the spindle (36) and the casing (32) containing respective bearings (38, 39), and axially between said ends and the tap-carrier (51), said casing being disposed in sealed manner in the body (5).

3. Tapping apparatus according to any one of claims 1 and 2, characterized in that the sealing means (44a) are placed radially between an internal bearing surface (32b) of said casing at the far end thereof from a pressure inlet orifice (60) and an external bearing surface (36c) of the spindle or cylinder (36a) adjacent to the tap-carrier (80, 80').

4. Tapping apparatus according to any one of the preceding claims characterized in that it comprises a valve (64) for controlling the admission of pneumatic fluid into the abovespecified chamber and co-operating with an adjustable slope (66) by means of an actuator member (65) for opening and closing the valve (64) and movable with the plate relative to the slope (66).

5. Tapping apparatus according to claim 4, characterized in that it includes a pressure regulator (111) upstream from the valve (64).

6. Tapping apparatus according to any one of the preceding claims characterized in that the above-specified angular coupling allowing a limited degree of freedom for outward displacement between the spindle or cylinder (32) and the tap-carrier (51) consists in corresponding longitudinal prismatic surfaces (48, 81) e.g. hexagonal in contour, provided on the cylinder (36) and the tap-carrier (51).

7. Tapping apparatus according to claim 6, characterized in that the longitudinal displacement of the tap-carrier (51) is limited by an inside flange (71) on the tap-carrier displaceable with little clearance along a housing (49) inside the cylinder (36) and on which the above-specified pneumatic pressure is applied, encountering a shoulder (50) in said cylinder and delimiting the prismatic surfaces (48, 51) thereof.

Ansprüche

1. Apparat zum automatischen Gewindeschneiden in Teilen, die in einem Metallband (170) angeordnet sind, das sich schrittweise zwischen einem feststehenden Tisch (3) einer Stanzpresse und deren beweglicher Platte (4) bewegt, die einen Mechanismus (14) zum Umsetzen ihres Hubes in eine hin- und hergehende Drehbewegung mit einer dem Hub entsprechenden Amplitude trägt, um die Drehbewegung auf einen Gewindeschneidekopf (18) zu übertragen, der entlang seiner Drehachse durch die Platte (4) angetrieben wird und dessen relativ zum Kopf (18) beweglicher Gewindebohrer-Halter (51) einerseits einer parallel zur genannten Drehachse gerichteten Kraft und andererseits der genannten Drehbewegung unterworfen ist, dadurch **gekennzeichnet**, daß der genannte Gewindebohrer-Halter (51) die Kolbenstange und den Kolben eines Arbeitszylinders darstellt, der dicht abschließend in einer den Zylinder bildenden Spindel (36, 36a, 98) gleitet, wobei er gegenüber dieser drehfest ist und wobei der Zylinder drehbar in einem Gehäuse (32) gelagert ist, wogegen die parallel zur Drehachse gerichtete Kraft (F$_d$) durch Zuführen eines pneumatischen Druckfluides in eine dichte Kammer erzeugt wird, die von dem Ende des Gewindebohrer-Halters (51) begrenzt wird, wobei die genannte Spindel (36, 36a, 98), das genannte Gehäuse (32) und Dichtungsmittel (44, 44a, 95) konzentrisch zueinander angeordnet sind.

2. Gewindeschneideapparat nach Anspruch 1, dadurch **gekennzeichnet**, daß die Dichtungsmittel (44) in Durchmesserrichtung betrachtet zwischen einem inneren Ende (43) der Spindel (36) und dem Gehäuse (32), das ihm als Wellenlager dienende Wälzkörper (38) bzw. (39) enthält, und axial zwischen diesem Ende und dem Gewindebohrer-Halter (51) angeordnet sind, wobei dieses Gehäuse in dichter Weise in dem Körper (5) angeordnet ist.

3. Gewindeschneideapparat nach einem der Ansprüche 1 und 2, dadurch **gekennzeichnet**, daß die Dichtungsmittel (44a) radial zwischen einem einer Druckeintrittsöffnung (60) fernen inneren Lagerabschnitt (32b) des genannten Gehäuses und einem dem Gewindebohrer-Halter (80, 80') nahen äußeren Lagerabschnitt (36c) der Spindel oder des Zylinders (36a) angeordnet ist.

4. Gewindeschneideapparat nach einem der vorhergehenden Ansprüche, dadurch **gekennzeichnet**, daß er ein Ventil (64) zur Steuerung des Zuflusses des pneumatischen Fluides zur obengenannten Kammer umfaßt, das mit einer einstellbaren Rampe (66) über ein Organ (65) zur Betätigung des Öffnens und des Schließens des Ventils (64) zusammenwirkt, wobei das Organ (65) zusammen mit der Platte relativ zur Rampe (66) beweglich ist.

5. Gewindeschneideapparat nach Anspruch 4, dadurch **gekennzeichnet**, daß er einen Druckregler (111) stromaufwärts des Ventils (64) hat.

6. Gewindeschneideapparat nach einem der vorhergehenden Ansprüche, dadurch **gekennzeichnet**, daß die eine begrenzte Längsverschiebung nach außen hin zulassende oben genannte Drehkopplung zwischen der Spindel oder dem Zylinder (36) und dem Gewindebohrer-Halter (51) aus in Längsrichtung verlaufenden prismatischen Flächen (48, 81) besteht mit beispielsweiser hexagonaler Kontur, die in korrespondierender Weise an dem Zylinder (36) und dem Gewindebohrer-Halter (51) ausgebildet sind.

7. Gewindeschneideapparat nach Anspruch 6, dadurch **gekennzeichnet**, daß die Begrenzung der Längsverschiebung des Gewindebohrer-Halters (51) durch das Anschlagen eines mit geringem Spiel in einem Hohlraum (49) des Zylinders (36) beweglichen inneren Flansches (71) des Gewindebohrer-Halters, auf den der obengenannte pneumatische Druck wirkt, an einer Schulter (50) dieses Zylinders erreicht wird, welche die prismatischen Flächen (48, 51) begrenzt.

# FIG.1

FIG.2

FIG.3

FIG.4

FIG.5

FIG.6